# FASCICULE DE BREVET EUROPEEN

(11) **EP 2 099 862 B1**
(45) Date de publication et mention de la délivrance du brevet: **05.07.2017**
(21) Numéro de dépôt: 07731468.0
(22) Date de dépôt: 16.05.2007
(51) Int. Cl.: C08L 23/10, C08L 71/12, C08K 3/40, B29C 45/00

(54) **NOUVELLE COMPOSITION THERMOPLASTIQUE ET SES UTILISATIONS**
NEUE THERMOPLASTISCHE ZUSAMMENSETZUNG UND VERWENDUNGEN DAVON
NEW THERMOPLASTIC COMPOSITION AND ITS USES

(30) Priorité: 01.06.2006 FR 0604877
(43) Date de publication de la demande: 16.09.2009
(73) Titulaire: Sumika Polymer Compounds (France) SA, 13310 Saint Martin de Crau (FR)
(72) Inventeur: GAALOUL, Enis, 13310 Saint Martin de Crau (FR); BOLLAERT, Franck, 30000 Nîmes (FR)
(74) Mandataire: Santarelli
(86) Numéro de dépôt international: PCT/FR2007/000832
(87) Numéro de publication internationale: WO 2007/138177

(56) Documents cités:
- EP-A2- 0 358 993
- EP-A2- 0 703 273
- US-A- 5 369 173
- US-A- 5 554 677

## Description

La présente invention concerne des compositions thermoplastiques à base de polypropylène et de polyphénylène éther, leurs procédés de préparation et leurs utilisations pour la fabrication de pièces mécaniques, en particulier de pièces automobiles.

L'industrie automobile utilise depuis longtemps des pièces plastiques sous le capot moteur. En effet, les pièces métalliques sont chères et contribuent principalement au poids des véhicules.

Différents types de polymères ont été utilisés jusqu'à présent (notamment des polyamides, des polybutylènes téréphtalates, des polypropylènes, chargés en talc ou en fibres de verre...), en fonction du niveau de température sous le capot et des propriétés mécaniques recherchées.

Les polyamides chargés en fibres de verre (PAGF) sont principalement utilisés pour fabriquer, par exemple, les boîtes à eau de radiateurs de refroidissement, des tubulures d'admission ou répartiteur d'air ou encore des tubulures du circuit de refroidissement.

Pour d'autres applications, le matériau de base a changé, par exemple pour les hélices, supports d'hélice de refroidissement et buses de refroidissement pour lesquels le type de résine polyamide a été modifié ou pour lesquels on utilise à présent dans le domaine du polypropylène chargé en fibres de verre, en fonction des cahiers des charges de constructeurs.

Cependant, de nouvelles substitutions de matière sont recherchées, en fonction des nécessités économiques, de la réduction du poids des véhicules qui ont un impact sur les émissions de polluants, et la facilité d'intégration de nouvelles applications.

La tendance actuelle va vers l'utilisation croissante de polypropylène chargé en fibres de verre (PPGF), en remplacement de polyamide chargé en fibres de verre (PAGF), ou bien de polybutylène téréphtalate chargé en fibres de verre (PBTGF).

Bien que le PPGF présente des avantages en termes de coût, de poids, d'aptitude au recyclage ou de réduction de temps de cycle d'injection, certaines caractéristiques physiques de ce produit sont inférieures à celle du polyamide (en particulier la tenue en température, la tenue au choc et la tenue au fluage).

De plus, certaines qualités de PPGF présentent des retraits différents qui peuvent conduire à des déformations sur pièces différentes des PAGF. De ce fait, les pièces en PPGF ne sont pas acceptables dimensionnellement, et il est nécessaire de modifier ou de remplacer les moules d'injection.

Ainsi, le cahier des charges de certaines applications ne peut être atteint avec les caractéristiques des PPGF courant, ce qui en limite l'utilisation.

Il existe donc dans le domaine un besoin en nouvelles compositions thermoplastiques présentant des propriétés physiques comparables, voire améliorées, par rapport aux compositions existantes, tout en permettant de remplir les conditions fixées pour leurs applications, notamment en termes de coût, de poids et d'aptitude au recyclage.

Dans l'art antérieur le document US 5,369,173 décrit une résine comprenant 100 parties d'un mélange composé de 1 à 50 % de polyphénylène éther, 10 à 40% de polymère de polypropylène non modifié par un composé insaturé contenant de l'oxygène, 10 à 90 % de polymère de polypropylène modifié par un composé insaturé contenant de l'oxygène et 0 à 30% d'une substance de type caoutchouc, élastique à température ambiante ; et de 3 à 60 parties de fibre de verre. Ainsi la quantité de fibres de verre est comprise entre 2,9% (3 parts / 103 parts) et 37,5% (60 parts/160 parts) de la composition. Ce document ne décrit pas une composition de thermoplastique comprenant 40 % de fibres de verre.

De plus, ce document indique que quand la quantité de fibres de verre est augmentée, alors la qualité des compositions obtenue est inférieure (propriétés cinétiques déséquilibrées et fabrication plus difficile).

Le document EP 0703273 décrit une composition comprenant du polypropylène, qui peut être un copolymère de propylène, du polyphénylène éther, et une charge qui peut être de la fibre de verre. Les compositions décrites ne contiennent pas de fibre de verre en quantité supérieure à 20%.

Le document EP 0358993 décrit une composition comprenant du polypropylène, du polyphénylène éther. Cette composition peut en outre contenir des filaments de verre sans qu'il ne soit précisé les quantités envisageables.

Le document US 5,554,677 évoque des compositions pouvant comprendre de 4% à 49,7% de fibre de verre mais les exemples décrits aux tableaux 1 et 2 ne comparent que des compositions comprenant de 0 à 30,67% de fibre de verre.

On a maintenant trouvé des compositions thermoplastiques comprenant du PPGF, du PPE et un stabilisant permettant d'atteindre ces objectifs.

L'invention concerne donc, selon un premier aspect, selon les revendications 1 à 7:
1. Une composition thermoplastique comprenant, en poids total de la composition : de 45 a 65% de PP copolymère de MFI 20-30, de 5 a 25% de polyphénylène 5 éther (PPE), de 0,5 a 7% d'agent de couplage, de 0,3 a 4% de stabilisants-antioxydants, de 0,2 a 2% de stabilisant époxy et 40% de fibres de verre. 2. Une composition caractérisée en ce qu'elle comprend en outre de 0 a 15% de polysulfure de phenylene (PPS) et/ ou de 0 a 20% de nanoparticules et/ou de 0 a 10% de mica. 3. Une composition caractérisée en ce que le polyphénylène éther est sous forme de poudre ou de concentre de polyphénylène éther modifie ou encore de résines de polyphénylène éthers. 4. Une composition caractérisée en ce que le polyphénylène éther modifie contient au moins un additif choisi parmi le polystyrène cristal, le 20 polystyrène renforce choc, un stabilisant et un retardateur de flamme. 5. Une composition caractérisée en ce qu'elle a une tenue au fluage augmentée d'au moins 30 10% par rapport aux mêmes compositions sans PPE, mesurée selon la norme ISO 899-1 (ASTM D-2990). 6. Composition selon l'une quelconque des revendications 1 a 5, caractérisée en 25 ce qu'elle présente un module de traction a 120°C augmente d'au moins 20% par rapport aux mêmes compositions sans PPE, mesure selon la norme ISO 527. 7. Une composition caractérisée en ce qu'elle a une tenue au choc augmentée d'au moins 10% par rapport aux mêmes compositions sans PPE, mesurée selon la norme ISO 179/ieA.

Selon l'invention encore, le polypropylène peut être sous forme d'homopolymère, de copolymère, d'homopolymère haute cristallinité ou sous forme hétérophasique. Préférentiellement, selon l'invention le polypropylène est sous la forme d'homopolymère ou de copolymère.

Quelque soit sa forme, le polypropylène peut présenter différentes fluidités, allant de 3 à 100 MFI (Melt Flow Index = Indice de fluidité à chaud) et de préférence de 10 à 75 MFI, mesurée selon la norme ISO 1133 à 230°C et à 2,16 Kg. Très préférentiellement selon l'invention le polypropylène aura une fluidité allant de 15 à 60 MFI.

Lorsqu'il est sous forme de copolymère, le polypropylène peut être un copolymère propylène-éthylène qui présentent des propriétés aux chocs améliorées.

Parmi les polypropylènes utilisables selon l'invention, on peut citer les produits référencés 100 GA01, 100 GA04, 100 GA12, 100 CA 50, 401XCB12 (du fournisseur British Petroleum (BP)) ou PPH 4050, PPH 4060, PPH 7060, PPH 9060, PPH11012 (du fournisseur ATOFINA), ou encore ELTEX PCHCW 280 (du fournisseur SOLVAY), DOW H507-03Z (du fournisseur MITSUI). Préférentiellement selon l'invention on utilise les produits référencés 100 GA12 (du fournisseur BP) ou PPH11012 (du fournisseur ATOFINA).

Selon un autre aspect de l'invention, la composition peut également contenir de 0 à 30 % de polypropylène de second choix, et/ou de broyats de pièces ou carottes d'injection en polypropylène.

Selon l'invention, les fibres de verre incluses dans le PPGF peuvent être choisies parmi les fibres de verre spécifiques pour polypropylène telles que celles référencées CS147A-14P, CS144-14C (du fournisseur OCC Owens Corning), ou encore MAXICHOP 3299 (du fournisseur PPG), EC13 4,5mm 968 (du fournisseur VETROTEX), ECS 03T-480/FE (du fournisseur NEG Nippon Electric Glass). Préférentiellement selon l'invention on utilise de l'OCC CS147A-14P.

Selon l'invention, les polyphénylènes éthers (PPE) utilisables dans les compositions peuvent par exemple être choisis parmi la gamme du producteur ASAHI KASEI, tel que par exemple les produits référencés S202A, K1065, K1561, X0102, P401, ou encore P402. Il existe différents types de PPE. Préférentiellement on utilise les PPE de type poly(2,6 diméthyl-1,4-phenylene ether) suivant la nomenclature chimique international.

Le polyphénylène éther utilisé peut être, par exemple, sous forme de poudre ou de concentré de polyphénylène éther modifié ou encore de résines de polyphénylène éther qui peuvent être généralement obtenues par couplage d'un ou plusieurs phénols en présence de catalyseurs appropriés.

Selon un aspect préféré, le polyphénylène éther modifié peut contenir au moins un additif choisi parmi le polystyrène cristal ou le polystyrène renforcé choc (par exemple du HIPS (Poly(Butadiène-Styrène)), un stabilisant et un retardateur de flamme qui peut être un phosphate aromatique.

L'agent de couplage peut, par exemple être choisi parmi la gamme des produits de marque CROMPTON (Interloy P1085 ou W1095 ou Polybond 3200 (du fournisseur UNIROYAL CHEMICAL)) ou du fournisseur POLYRAM (Bondyram 1001) ou du fournisseur ALPHAMIN (Alphamin NP594). Selon l'invention, l'agent de couplage est utilisé seul et non pas mélangé à un produit comme par exemple des élastomères comme très souvent dans l'art antérieur.

Selon une forme préférée de l'invention, l'agent de couplage peut être de l'anhydride maléique modifié avec du polypropylène homopolymère (sous forme de granulés). L'anhydride maléique peut également se présenter sous forme liquide.

Selon une autre forme de l'invention, d'autres agents de couplage peuvent être constitués de silanes comme par exemple le vinyltriméthoxysilane.

D'autres adjuvants usuels dans le domaine peuvent également être présents tels que par exemple des charges, des renforts, des stabilisants, des antioxydants, des ignifugeants, des colorants. A titre de charge on peut citer les charges minérales, telles que le carbonate de calcium ou le talc. L'ajout de telles charges, associées à la fibre de verre, permet d'obtenir une composition qui présente l'intérêt de réduire la déformation après injection des pièces fabriquées par injection thermoplastique.

Selon l'invention, on peut ajouter à la composition un agent de cristallisation du polypropylène, ce qui pour avantage de réduire le temps de cycles en injection. Selon l'invention, on peut aussi ajouter à la composition du polysulfure de phénylène (PPS) choisi parmi les RYTON P6, P4 (du fournisseur CHEVRON PHILLIPS) ou les FORTRON 0203, 0203HS,0205, 0214 de TICONA.

Selon l'invention, à titre de nanoparticules utilisables on peut citer des organo silicates nanodispersées de type NANOFIL SE 3000 vendus par la société SÜD CHEMIE ou encore des aluminosilicates (forme montmorillonite) du fournisseur Nanocor Inc..

On ajoutera du mica aux compositions suivant l'état de surface que l'on désire obtenir. Pour cela, on peut utiliser du mica vendu sous la dénomination MUSCOVITE MU85 par la société KEYSER et MACKAY.

Des compositions préférées selon l'invention sont les suivantes :
1- Formule XPG 10% FV :
   - PP homopolymère MFI 10-15 : 65 à 75%
   - PPE : 5 à 25%
   - Agent de couplage : 0,5 à 7%
   - Stabilisants- antioxydants : 0,3 à 4%
2- Formule XPG 30% FV :
   - PP homopolymère MFI 10-15 : 45 à 65%
   - PPE : 5 à 25%
   - PPS : 0 à 15%
   - Stabilisants- antioxydants : 0,3 à 4%
   - Agent de couplage : 0,5 à 7%
3- Formule XPG 40% FV :
   - PP copolymère MFI 20-30 : 45 à 65%
   - PPE : 5 à 25%
   - PPS : 0 à 15%
   - Agent de couplage : 0,5 à 7%
   - Stabilisants-antioxydants : 0,3 à 4%
   - Stabilisant époxy : 0,2 à 2%

Selon l'invention, les compositions peuvent présenter une tenue au fluage augmentée d'au moins 10% par rapport aux mêmes compositions sans PPE.

De même, les compositions selon l'invention peuvent présenter un module de traction à 120°C augmenté d'au moins 20% par rapport aux mêmes compositions sans PPE. Avantageusement, les compositions selon l'invention présentent un module de traction à 120°C, mesurée selon la norme ISO527 (vitesse de traction de 1 mm/min), compris entre 4000 et 8000, de préférence entre 5000 et 7000 MPa.

De même encore les compositions selon l'invention peuvent présenter une tenue au choc augmentée d'au moins 10% par rapport aux mêmes compositions sans PPE. Avantageusement, lesdites compositions peuvent avoir une tenue au choc à 23°C, mesurée selon la norme ISO180/4 (Choc Izod non entaillé), compris entre 30 et 60 kJ/m², de préférence entre 40 et 50 kJ/m².

Selon un autre aspect, selon les revendications 8 à 10 l'invention concerne également, un procédé de préparation des compositions selon l'invention.

On pourra utiliser par exemple un procédé d'extrusion mono-vis à débit moyen (250 kg/h par exemple), à 1 ou 2 étages et de diamètre de vis 120 mm (type MAPRE 120). Ce procédé est particulièrement bien adapté si l'on incorpore dans la composition selon l'invention des nanoparticules prédispersées sous forme de mélanges-maîtres.

Ce procédé, dans lequel une vis d'extrusion tourne dans un cylindre, peut par exemple être réalisé de la manière suivante :
- on prépare un mélange à sec des différents constituants (matières premières) dans un tonneau rotatif manuel ou motorisé, puis après séchage éventuel des polymères (résines de base), on achemine ce mélange jusqu'à l'extrudeuse mono-vis permettant la plastification du ou des polymères et l'incorporation des adjuvants (charges, renforts, stabilisants, ignifugeants, colorants). Cet acheminement peut se faire par convoyage et l'introduction des constituants se fait par trémie qui dose par gravimétrie de préférence. Selon une variante du procédé selon l'invention, l'introduction des fibres de verre ou des charges peut se faire en plusieurs endroits de l'extrudeuse, par exemple pour part en tête et pour part en un ou plusieurs points disposés latéralement sur la partie distale de l'extrudeuse. Cette variante permet d'obtenir un mélange dans lequel la fibre de verre est peu cassée par les mouvements de l'extrudeuse. De plus avec cette variante, le mélange obtenu est beaucoup plus homogène qui si la totalité de la fibre de verre avait été introduite en tête d'extrudeuse. Enfin, cette variante permet de diminuer considérable les risques d'engorgement qui surviennent lorsque tout la fibre de verre est introduite uniquement en tête d'extrudeuse.

Après dégazage dans l'extrudeuse, par exemple à l'aide d' une pompe à anneaux liquides (élimination des traces d'eau, de monomère, de solvants et de produits volatils), on effectue l'extrusion à travers une filière de joncs ayant, par exemple, de 3 à 4 mm de diamètre.

On effectue un entraînement des joncs par tapis (dans le cas d'aspersion d'eau) ou par le granulateur (dans les autres cas).

Après séchage des joncs, on procède à une granulation (coupe des granulés cylindriques de 2 à 3 mm de diamètre de longueur 3 mm environ), puis à une homogénéisation par tonneau mélangeur, suivie d'un tamisage sur tamis vibrant.

Alternativement, on utilisera un procédé par extrusion bi-vis (deux vis corotatives évoluant dans un fourreau bi-vis) à débit élevé de 900 à 1500 kg/h, comme par exemple l'extrudeuse COPERION Werner & Pfeiderer de type ZSK 92 (de rapport UD 36 et de diamètre de vis 92 mm).

L'alimentation de ce type de machine s'effectue généralement grâce à des doseurs pondéraux à perte de poids ou des doseurs volumétriques qui dosent les matières premières sur les vis d'extrusion le long du cylindre.

On dose ainsi les différents ingrédients séparément (polymères, additifs, charges et renforts).

On peut également passer par un pré-mélange des additifs ou polymères selon le type de ligne rencontrée.

L'introduction du PPE poudre peut se faire par convoyage sous atmosphère inerte.

La suite du procédé est effectué comme dans le procédé d'extrusion mono-vis (refroidissement des joncs, granulation, tamisage).

L'invention concerne également, selon les revendications 11 et 12 des pièces mécaniques, en particulier de pièces automobiles, fabriquées dans une composition selon l'invention.

L'invention concerne également, selon la revendication 13, l'utilisation des compositions thermoplastiques décrites plus haut pour la fabrication de pièces mécaniques, en particulier de pièces automobiles.

En particulier, lesdites compositions peuvent être utilisées dans les applications suivantes dans le domaine des pièces automobiles :
▪ Applications face avant véhicule :
   - module face avant
▪ Applications boucle de refroidissement automobile :
   - hélices et/ou buses refroidissement moteur
   - boîte à eau de radiateur de refroidissement
   - durites et tuyauteries du circuit de refroidissement moteur
▪ Applications acoustiques :
   - plancher de véhicules
   - compartiment bagages
   - capot couvre moteur
   - isolateurs du compartiment moteur
▪ Composants de portières automobiles :
   - poignée de porte
   - étrier (support) de poignée de porte
   - boîtier de moteur de lève-vitres
   - boîtier de haut-parleurs
   - module de porte
▪ Composants de l'habitacle automobile (cockpit) :
   - structure de console centrale
   - poutre structurelle (hybride plastic/metal)
   - panneau de protection-feu
   - support de pédaliers
   - pédales
   - boîtiers d'airbags
▪ Composants de sièges automobiles :
   - composants de structure de sièges
   - structure de repose-tête
   - structure d'accoudoirs
▪ Pièces d'extérieur automobiles:
   - barres de toit
   - structure rétroviseur-platine
   - coques de rétroviseur
   - enjoliveurs
▪ Autres pièces automobiles :
   - boîtiers de phares automobiles
   - turbines de système de climatisation
   - bacs batterie
   - support de levier de vitesse
   - composants de système de suspension à air
   - composants de système de purification d'air
   - grille située au niveau des essuie-glaces
   - boîtiers de moteur d'essuie-glaces

L'invention concerne encore, selon encore un autre aspect, l'utilisation des compositions thermoplastiques décrites plus haut pour la fabrication, par exemple par extrusion, de plaque destinées à être thermoformées par la suite.

D'autres applications intéressantes, hors du domaine de l'automobile, sont par exemple la fabrication de systèmes d'engrenages (cam), de cuves de machine à laver le linge, de boîtiers de système de filtration de piscines, de boîtiers de pompes, de cuves de systèmes de toilettes, d'éléments de chaudières ou encore de chaises design.

Lesdites compositions selon l'invention peuvent être utilisées dans des procédés de transformation comme par exemple la technologie de transformation par injection d'eau (en particulier par la variante développée par la société TiK (Freiburg)) ou encore le surmoulage d'inserts métalliques en particulier pour les pièces de structures hybrides métal-plastique (par exemple, les pédales hybrides de pédaliers automobiles et les pièces structurelles de module de face avant). L'exemples 1 à 4 suivantes ne sont pas selon la présente invention e la présente revendication 1.

### Exemple 1 - Formule XPG 30% à base de PPE

Les composants sont introduits dans des doseurs gravimétriques. Ceux-ci sont introduits latéralement à 3 niveaux d'une extrudeuse double-vis COPERION (Werner & Pfeiderer).

On obtient ainsi une composition thermoplastique contenant
10 % de poudre de PPE S202A (ASAHI KASEI) ;
30 % de fibres de verre spécifiques pour polypropylène OCC CS147A 14P (OCC Owens Corning) ;
51 % de PP homopolymère 100 GA12 (BP) ou PPH11012 (ATOFINA)
4 % d'un mélange d'antioxydants (IRGANOX 1010, IRGANOX PS802, IRGANOX MD1024 du fournisseur CIBA, HOSTANOX PAR 24 PWD du fournisseur CLARIANT)
5% d'agent couplant BONDYRAM 1001 (du fournisseur POLYRAM)

### Exemple 2 - Formule XPG 30% à base de PPE et de PPS

Les composants sont introduits dans des doseurs gravimétriques. Ceux-ci sont introduits latéralement à 3 niveaux de l'extrudeuse double-vis COPERION (Werner & Pfeiderer).

On obtient ainsi une composition thermoplastique contenant
10 % de poudre de PPE S202A (ASAHI KASEI) ;
10 % de poudre de PPS RYTON P6 (CHEVRON PHILLIPS) ;
30 % de fibres de verre spécifiques pour polypropylène OCC CS147A 14P (OCC Owens Corning) ;
41 % de PP homopolymère 100 GA12 (BP) ou PPH11012 (ATOFINA)
4 % d'un mélange d'antioxydants (IRGANOX 1010, IRGANOX PS802, IRGANOX MD1024 du fournisseur CIBA, HOSTANOX PAR 24 PWD du fournisseur CLARIANT)
5% d'agent couplant BONDYRAM 1001 (du fournisseur POLYRAM)

### Exemple 3 - Formule XPG 30% à base de PPE, Nanoparticules

Les composants sont introduits dans des doseurs gravimétriques. Une extrudeuse mono-vis MAPRE à débit moyen est utilisée pour la transformation.

On obtient ainsi une composition thermoplastique contenant
10 % de poudre de PPE S202A (ASAHI KASEI) ;
10 % d'organo silicates nanodispersées de type NANOFIL SE 3000 (SÜD CHEMIE) ;
30 % de fibres de verre spécifiques pour polypropylène OCC CS147A 14P (OCC Owens Corning) ;
41 % de PP homopolymère 100 GA12 (BP) ou PPH11012 (ATOFINA)
4 % d'un mélange d'antioxydants (IRGANOX 1010, IRGANOX PS802, IRGANOX MD1024 du fournisseur CIBA, HOSTANOX PAR 24 PWD du fournisseur CLARIANT)
5% d'agent couplant BONDYRAM 1001 (du fournisseur POLYRAM)

### Exemple 4 - Formule XPG 30% à base de PPE et mica

Les composants sont introduits dans des doseurs gravimétriques. Ceux-ci sont introduits latéralement à 3 niveaux de l'extrudeuse double-vis COPERION (Werner & Pfeiderer).

On obtient ainsi une composition thermoplastique contenant
10 % de poudre de PPE S202A (ASAHI KASEI) ;
10 % de mica MUSCOVITE MU85 (KAYSER et MACKAY)
30 % de fibres de verre spécifiques pour polypropylène OCC CS147A 14P (OCC Owens Corning) ;
41 % de PP homopolymère 100 GA12 (BP) ou PPH11012 (ATOFINA)
4 % d'un mélange d'antioxydants (IRGANOX 1010, IRGANOX PS802, IRGANOX MD1024 du fournisseur CIBA, HOSTANOX PAR 24 PWD du fournisseur CLARIAN)
5% d'agent couplant BONDYRAM 1001 (du fournisseur POLYRAM) Essais comparatifs :

### Exemple 5: Préparation d'une composition de PPGF30 couplé chimiquement

Les composants sont introduits dans des doseurs gravimétriques. Ceux-ci sont introduits latéralement à 3 niveaux de l'extrudeuse double-vis COPERION (Werner & Pfeiderer).

30 % de fibres de verre spécifiques pour polypropylène OCC CS147A 14P (OCC Owens Corning) ;
64,8 % de PP homopolymère 100 GA12 (BP) ou PPH11012 (ATOFINA)
4 % d'un mélange d'antioxydants (IRGANOX 1010, IRGANOX PS802, IRGANOX MD1024 du fournisseur CIBA, HOSTANOX PAR 24 PWD du fournisseur CLARIANT)
1,2% d'agent couplant BONDYRAM 1001 (du fournisseur POLYRAM)

### Exemple 6 : mesure de la tenue au fluage

On a mesuré la tenue au fluage de la composition de l'exemple 1 selon la norme ISO 899-1 (ASTM D-2990).

Brièvement, la mesure consiste à appliquer une charge donnée, à une température donnée et à mesurer l'allongement au bout d'un temps donné qui peut aller de quelques heures à plusieurs jours.

Les conditions expérimentales sont les suivantes : masse de 75kg à 80°C avec des éprouvettes de traction de type ASTM, de dimensions 12,5x3 mm).

Les résultats obtenus sont les suivants :
La composition XPG 30% FV présente un allongement réduit de 20% par rapport à une composition de PPGF30 couplé chimiquement de l'exemple 5 (qui présente un allongement voisin de 2% après 25h, dans les conditions expérimentales décrites ci-dessus).

### Exemple 7 : mesure de la résistance à la traction

On a mesuré la résistance à la traction de la composition de l'exemple 1 selon la norme ISO527.

Brièvement, l'essai est effectué en utilisant une vitesse de traction de 1 mm/min, à une température de 120°C, suivant les autres conditions décrites dans la norme.

Les résultats obtenus sont les suivants :
La composition XPG 30% FV présente un module de traction augmenté de 45% par rapport à une composition de PPGF30 couplé chimiquement de l'exemple 5.

La composition XPG 10% FV présente un module de traction équivalent à un PPGF20 couplé chimiquement.

### Exemple 8 : mesure de la tenue au choc

On a mesuré la tenue au choc de la composition de l'exemple 1 selon la norme ISO 179/1eA.

Brièvement, la mesure consiste à percuter une éprouvette entaillée de type Charpy par un pendule, selon les critères définis dans la norme.

Les résultats obtenus sont les suivants : On obtient une valeur de 9,7 kJ/m2 comparée à une composition similaire de PPGF30 couplé chimiquement de l'exemple 5 sans PPE, qui présente une valeur de 7,8 kJ/m²

Soit une augmentation de 20% de la tenue au choc.

## Revendications

1. Composition thermoplastique comprenant, en poids total de la composition :
• de 45 à 65% de PP copolymère de MFI 20-30,
• de 5 à 25% de polyphénylène éther (PPE),
• de 0,5 à 7% d'agent de couplage,
• de 0,3 à 4% de stabilisants-antioxydants,
• de 0,2 à 2% de stabilisant époxy et
• 40% de fibres de verre.

2. Composition selon la revendication 1, **caractérisée en ce qu'**elle comprend en outre
• de 0 à 15% de polysulfure de phénylène (PPS) et/ou
• de 0 à 20% de nanoparticules et/ou
• de 0 à 10% de mica.

3. Composition selon l'une quelconque des revendications 1 à 2, **caractérisée en ce que** le polyphénylène éther est sous forme de poudre ou de concentré de polyphénylène éther modifié ou encore de résines de polyphénylène éthers.

4. Composition selon la revendication 3, **caractérisée en ce que** le polyphénylène éther modifié contient au moins un additif choisi parmi le polystyrène cristal, le polystyrène renforcé choc, un stabilisant et un retardateur de flamme.

5. Composition selon l'une quelconque des revendications 1 à 4, **caractérisée en ce qu'**elle a une tenue au fluage augmentée d'au moins 10% par rapport aux mêmes compositions sans PPE, mesurée selon la norme ISO 899-1 (ASTM D-2990).

6. Composition selon l'une quelconque des revendications 1 à 5, **caractérisée en ce qu'**elle présente un module de traction à 120°C augmenté d'au moins 20% par rapport aux mêmes compositions sans PPE, mesuré selon la norme ISO527.

7. Composition selon l'une quelconque des revendications 1 à 6, **caractérisée en ce qu'**elle a une tenue au choc augmentée d'au moins 10% par rapport aux mêmes compositions sans PPE, mesurée selon la norme ISO 179/1eA.

8. Procédé de préparation d'une composition selon l'une quelconque des revendications 1 à 7, **caractérisé en ce que** l'on utilise une extrudeuse monovis à débit moyen (environ 250 kg/h) à deux étages de diamètre de vis 120 mm.

9. Procédé de préparation d'une composition selon l'une quelconque des revendications 1 à 8, **caractérisé en ce que** l'on utilise une extrudeuse bi-vis à débit élevé de 900 à 1500 kg/h.

10. Procédé selon l'une quelconque des revendications 8 ou 9, **caractérisé en ce que** la fibre de verre est introduite dans l'extrudeuse pour part en tête et pour part en un ou plusieurs points disposés latéralement sur la partie distale de l'extrudeuse.

11. Pièce mécanique, particulièrement pièce d'automobile, **caractérisée en ce qu'**elle est fabriquée à l'aide de la composition selon l'une quelconque des revendications 1 à 7.

12. Pièce mécanique selon la revendication 11, **caractérisée en ce qu'**il s'agit
• d'une pièce de boucle de refroidissement automobile comme par exemple une hélice et:ou une buse de refroidissement moteur, une boîte à eau de radiateur de refroidissement, une durite, ou encore une tuyauterie du circuit de refroidissement moteur ;
• d'une pièce de face avant véhicule comme par exemple un module de face avant
• d'une pièce d'application acoustique, comme par exemple un plancher de véhicules, un compartiment à bagages, un capot couvre moteur ou encore un isolateur du compartiment moteur ;
• d'un composants de portières automobiles comme par exemple une poignée de porte, un étrier (support) de poignée de porte, un boîtier de moteur de lève-vitres, un boîtier de haut-parleurs, un module de porte ;
• d'un composant de l'habitacle automobile (cockpit) comme par exemple une structure de console centrale, une poutre structurelle (hybride plastic/métal), un panneau de protection-feu, un support de pédaliers, une pédale, un boîtier d'airbags ;
• d'un composant de sièges automobiles comme par exemple un composant de structure de sièges, une structure de repose-tête ou encore une structure d'accoudoirs ;
• de pièces d'extérieur automobiles comme par exemple des barres de toit, une structure rétroviseur-platine, une coque de rétroviseur ou encore des enjoliveurs ;
• ou encore d'un boîtier de phares automobiles, d'une turbine de système de climatisation, d'un bac batterie, d'un support de levier de vitesse, d'un composant de système de suspension à air, d'un composant de système de purification d'air, d'une grille située au niveau des essuie-glaces ou encore d'un boîtier de moteur d'essuie-glaces ;
• de systèmes d'engrenages (cam), de cuves de machine à laver le linge, de boîtiers de système de filtration de piscines, de boîtiers de pompes, de cuves de systèmes de toilettes, d'éléments de chaudières ou encore de chaises design.

13. Utilisation d'une composition thermoplastique selon l'une quelconque des revendications 1 à 7, pour la fabrication de pièces mécaniques, particulièrement de pièces d'automobiles, très particulièrement de pièces mécaniques selon la revendication 12.

## Patentansprüche

1. Thermoplastische Zusammensetzung, die bezogen auf das Gesamtgewicht der Zusammensetzung Folgendes beinhaltet:
• 45 bis 65 % PP-Copolymer von MFI 20-30,
• 5 bis 25 % Polyphenylenether (PPE),
• 0,5 bis 7 % Kupplungsmittel,
• 0,3 bis 4 % Antioxidationsmittel-Stabilisator,
• 0,2 bis 2 % Epoxystabilisator und
• 40 % Glasfasern.

2. Zusammensetzung nach Anspruch 1, **dadurch gekennzeichnet, dass** sie ferner Folgendes beinhaltet:
• 0 bis 15 % Polyphenylensulfid (PPS) und/oder
• 0 bis 20 % Nanopartikel und/oder
• 0 bis 10 % Glimmer.

3. Zusammensetzung nach einem der Ansprüche 1 bis 2, **dadurch gekennzeichnet, dass** der Polyphenylenether in Form von Pulver oder von modifiziertem Polyphenylenetherkonzentrat oder auch von Polyphenylenetherharzen vorliegt.

4. Zusammensetzung nach Anspruch 3, **dadurch gekennzeichnet, dass** der modifizierte Polyphenylenether wenigstens einen Zusatzstoff enthält, ausgewählt aus Polystyrolkristall, stoßfestem Polystyrol, einem Stabilisator und einem Flammenhemmstoff.

5. Zusammensetzung nach einem der Ansprüche 1 bis 4, **dadurch gekennzeichnet, dass** sie eine Kriechbeständigkeit hat, die um wenigstens 10 % in Bezug auf dieselben Zusammensetzungen ohne PPE erhöht ist, gemessen gemäß der Norm ISO 899-1 (ASTM D-2990).

6. Zusammensetzung nach einem der Ansprüche 1 bis 5, **dadurch gekennzeichnet, dass** sie ein Zugmodul bei 120°C aufweist, das um wenigstens 20 % in Bezug auf dieselben Zusammensetzungen ohne PPE erhöht ist, gemessen gemäß der Norm ISO 527.

7. Zusammensetzung nach einem der Ansprüche 1 bis 6, **dadurch gekennzeichnet, dass** sie eine Schlagzähigkeit hat, die um wenigstens 10 % in Bezug auf dieselben Zusammensetzungen ohne PPE erhöht ist, gemessen gemäß der Norm ISO 179/1eA.

8. Verfahren zur Herstellung einer Zusammensetzung nach einem der Ansprüche 1 bis 7, **dadurch gekennzeichnet, dass** ein Einschneckenextruder mit mittlerem Ausstoß (etwa 250 kg/h) mit zwei Stufen mit einem Schneckendurchmesser von 120 mm benutzt wird.

9. Verfahren zur Herstellung einer Zusammensetzung nach einem der Ansprüche 1 bis 8, **dadurch gekennzeichnet, dass** ein Zweischneckenextruder mit einem hohen Ausstoß von 900 bis 1500 kg/h benutzt wird.

10. Verfahren nach Anspruch 8 oder 9, **dadurch gekennzeichnet, dass** die Glasfaser in den Extruder teilweise am Kopf und teilweise an mehreren seitlich am distalen Teil des Extruders angeordneten Punkten eingeleitet wird.

11. Mechanisches Teil, insbesondere ein Kfz-Teil, **dadurch gekennzeichnet, dass** es mit Hilfe der Zusammensetzung nach einem der Ansprüche 1 bis 7 hergestellt wird.

12. Mechanisches Teil nach Anspruch 11, **dadurch gekennzeichnet, dass** es sich um Folgendes handelt:
• ein Teil eines Kfz-Kühlkreislaufs wie zum Beispiel eine Schraube und/oder eine Motorkühldüse, ein Kühlradiator-Wasserkasten, ein Schlauch oder ein Rohr des Motorkühlkreislaufs;
• ein Fahrzeugfrontflächenteil, wie zum Beispiel ein Frontflächenmodul,
• ein akustisches Anwendungsteil, wie zum Beispiel ein Fahrzeugboden, ein Gepäckfach, eine Motorhaube oder ein Motorraumisolator;
• eine Kfz-Türkomponente wie zum Beispiel ein Türgriff, eine (Stütz-) Halterung für einen Türgriff, ein Fensterhebergehäuse, ein Lautsprechergehäuse, ein Türmodul;
• eine Komponente eines Kfz-Innenraums (Cockpit) wie zum Beispiel eine zentrale Konsolenstruktur, ein Strukturträger (Plastik/Metall-Hybrid), eine Brandschutzplatte, eine Pedalabstützung, ein Pedal, ein Airbag-Gehäuse;
• eine Komponente von Kfz-Sitzen, wie zum Beispiel eine Sitzstrukturkomponente, eine Kopfstützstruktur oder auch eine Armlehnenstruktur;
• externe Kfz-Teile wie zum Beispiel eine Dachreling, eine Rückspiegelplattenstruktur, eine Rückspiegelschale oder Radkappen;
• oder ein Kfz-Scheinwerfergehäuse, eine Turbine einer Klimaanlage, einen Batteriekasten, einen Schalthebelträger, eine Komponente des Luftfederungssystems, eine Komponente des Luftreinigungssystems, einen Grill, der sich an den Scheibenwischern befindet, oder ein Scheibenwischermotorgehäuse;
• Getriebesysteme (Nocke), Waschmaschinentrommeln, Gehäuse für eine Schwimmbeckenfilteranlage, Pumpgehäuse, Toilettenspülanlagen, Heizkesselelemente oder Designerstühle.

13. Verwendung einer thermoplastischen Zusammensetzung nach einem der Ansprüche 1 bis 7 für die Herstellung von mechanischen Teilen, insbesondere von Kfz-Teilen, insbesondere von mechanischen Teilen gemäß Anspruch 12.

## Claims

1. Thermoplastic composition comprising, by total weight of the composition:
• from 45 to 65% MFI 20-30 PP copolymer,
• from 5 to 25% polyphenylene ether (PPE),
• from 0.5 to 7% coupling agent,
• from 0.3 to 4% antioxidant stabilizers,
• from 0.2 to 2% epoxy stabilizer and
• 40% glass fibres.

2. Composition according to claim 1, **characterized in that** it also comprises
• from 0 to 15% polyphenylene sulphide (PPS) and/or
• from 0 to 20% nanoparticles and/or
• from 0 to 10% mica.

3. Composition according to any one of claims 1 to 2, **characterized in that** the polyphenylene ether is in the form of powder or of modified polyphenylene ether concentrate or also of polyphenylene ether resins.

4. Composition according to claim 3, **characterized in that** the modified polyphenylene ether contains at least one additive chosen from crystal polystyrene, shock-resistant reinforced polystyrene, a stabilizer and a flame retardant.

5. Composition according to any one of claims 1 to 4, **characterized in that** it has a creep resistance that is increased by at least 10% with respect to the same compositions without PPE, measured according to the standard ISO 899-1 (ASTM D-2990).

6. Composition according to any one of claims 1 to 5, **characterized in that** it has a tensile modulus at 120°C that is increased by at least 20% with respect to the same compositions without PPE, measured according to the standard ISO 527.

7. Composition according to any one of claims 1 to 6, **characterized in that** it has an impact strength that is increased by at least 10% with respect to the same compositions without PPE, measured according to the standard ISO 179/1eA.

8. Process for the preparation of a composition according to any one of claims 1 to 7, **characterized in that** a two-stage single-screw extruder is used at a medium flow rate (approximately 250 kg/h) having a screw diameter of 120 mm.

9. Process for the preparation of a composition according to any one of claims 1 to 8, **characterized in that** a twin-screw extruder is used at a high flow rate of 900 to 1500 kg/h.

10. Process according to any one of claims 8 or 9, **characterized in that** the glass fibre is introduced into the extruder partly at the top and partly at one or more points arranged laterally on the distal part of the extruder.

11. Mechanical part, in particular an automobile part, **characterized in that** it is produced using the composition according to any one of claims 1 to 7.

12. Mechanical part according to claim 11, **characterized in that** it is:
• a part of an automobile cooling loop such as for example an engine cooling fan and/or nozzle, a cooling radiator water tank, a hose, or also piping of the engine cooling circuit,
• a vehicle front face part such as for example a front face module,
• a part for acoustic use, such as for example for a vehicle floor, a luggage compartment, a bonnet or also an insulator for the engine compartment;
• a component for automobile doors such as for example a door handle, a door handle mounting (support), a window regulator motor housing, a loudspeaker housing, a door module;
• a component of an automobile cab (cockpit) such as for example a central console structure, a structural pillar (plastic/metal hybrid), a fire protection panel, a pedal assembly support, a pedal, an airbag housing;
• a component of automobile seats such as for example a seat structure component, a headrest structure or also an armrest structure;
• exterior parts of automobiles such as for example roof bars, a wing mirror-mounting plate structure, a wing mirror shell or also wheel trims;
• or also an automobile headlight housing, an air conditioning system turbine, a battery box, an accelerator support, an air suspension system component, an air purification system component, a grille situated at the level of the windscreen wipers or also a windscreen wiper motor housing;
• gear systems (cam), for washing machine drums, housings for filtration systems for swimming pools, pump housings, cisterns for toilet systems, boiler elements or also designer chairs.

13. Use of a thermoplastic composition according to any one of claims 1 to 7, for the production of mechanical parts, particularly automobile parts, very particularly mechanical parts according to claim 12.
